# EUROPEAN PATENT SPECIFICATION

(11) **EP 3 154 229 B1**
(45) Date of publication and mention of the grant of the patent: **27.01.2021**
(21) Application number: 15810981.9
(22) Date of filing: 23.06.2015
(51) Int. Cl.: H04L 12/851

(54) **DEVICE, SYSTEM AND METHOD FOR PROVIDING QUALITY OF SERVICE (QOS) FOR SERVICE PACKET**
VORRICHTUNG, SYSTEM UND VERFAHREN ZUR BEREITSTELLUNG VON DIENSTQUALITÄT (QOS) FÜR EIN SERVICEPAKET
DISPOSITIF, SYSTÈME ET PROCÉDÉ PERMETTANT DE FOURNIR UNE QUALITÉ DE SERVICE (QOS) POUR UN PAQUET DE SERVICE

(30) Priority: 24.06.2014 CN 201410286418
(43) Date of publication of application: 12.04.2017
(73) Proprietor: Huawei Technologies Co., Ltd., Longgang District Shenzhen, Guangdong 518129 (CN)
(72) Inventor: ZHANG, Lu, Shenzhen Guangdong 518129 (CN); HU, Yinliang, Shenzhen Guangdong 518129 (CN); WEI, Qikun, Shenzhen Guangdong 518129 (CN); REVIV, Opher, Shenzhen Guangdong 518129 (CN)
(74) Representative: Epping - Hermann - Fischer
(86) International application number: PCT/CN2015/082067
(87) International publication number: WO 2015/196961

(56) References cited:
- CN-A- 101 488 914
- CN-A- 102 143 088
- CN-A- 102 447 669
- US-A1- 2002 194 317
- US-A1- 2004 001 491
- US-A1- 2004 225 727
- US-A1- 2005 190 788
- US-A1- 2009 100 506
- US-A1- 2009 225 762
- US-A1- 2013 322 255
- US-B1- 8 621 556

## Description

### TECHNICAL FIELD

The present invention relates to the field of communications technologies, and in particular, to an apparatus, a system, and a method for providing quality of service QoS for a service packet.

### BACKGROUND

With continuous expansion of an enterprise in scale, an increasing quantity of branches may be established, and each branch needs to access a network to conduct business with a headquarter and another branch. Therefore, the enterprise needs to invest a large quantity of funds to purchase network communications devices such as access routers. On the other hand, in consideration of security and efficiency, in addition to basic communications devices, the enterprise further needs to deploy network services such as a firewall, intrusion detection, and wide area network acceleration. Due to a current hardware performance limitation, multiple functions required by the enterprise are difficult to be all integrated on a single device. Therefore, the enterprise generally needs to purchase multiple devices for cascading deployment, resulting in a series of problems such as large investment, complex interoperations between the devices, and high maintenance costs. In addition, device performance cannot be dynamically adjusted according to an enterprise requirement, which often causes performance insufficiency or waste. From a perspective of a telecommunications operator, an enterprise accessing a network needs to pay only corresponding broadband access fees. With rapid growth of traffic, the operator faces huge price scissors between increasing costs and earnings growth, and urgently needs to promote earnings by using a new service. There is a huge market in enterprise investment on communications device. If the operator can enter this value chain and provide, by using a network device of the operator, multiple services such as communication and security that are required by the enterprise, on one hand, investment and maintenance costs of the enterprise can be reduced, and on the other hand, the operator can obtain more earnings by providing functions and maintenance services of the new service, thereby achieving a win-win effect.

However, in a process of entering this value chain by the operator, how to better provide quality of service (Quality of Service, QoS) for a service packet is an urgent problem to be resolved.

US2002/0194317A1 relates to a method and system for controlling a policy-based network. Specifically, a first policy is established within a policy server of the network, wherein the first policy includes at least a first function and a second function. The first policy is converted into at least a second policy and a third policy, wherein the second policy is associated with the first function and the third policy is associated with the second function. The second policy and the third policy are distributed within the network to at least one node. The at least one node is controlled using the second policy and the third policy.

US2009/0100506A1 relates to a policy-based network flow management system and method. Specifically, various policy conditions are configured based at least in part upon source network conditions and multi-layer information (e.g., Layer 2, Layer 3, and so on) associated with network traffic. Where network traffic from a content requester is determined to satisfy a policy condition, a corresponding policy action is effectuated, e.g., dropping the network traffic, forwarding the network traffic, redirecting the network traffic, or queuing the network traffic.

US20050190788A1 discloses systems and methods to implement a shared access gateway that facilitate the multiplexing of multiple enterprise VLAN segments through a single device that translates the VLAN communications from the multiple enterprise segments on the customer side into VLAN communications for delivery over a network service provider network. A single shared access gateway is deployed that is connected to multiple enterprise side network segments. SVLAN controller modules monitor the enterprise side ports of the shared access gateway and processes communications received from those ports. Each SVLAN controller module uses IVL and SVL to maintain its separate forwarding database as packets ingress from the customer side and get processed by the SVLAN controller module. A plurality of translation functions are employed for proper encapsulation of VLAN traffic for transmission over a particular service provider network.

### SUMMARY

To better provide QoS for a service packet, embodiments of the present invention provide a system, a network device and a method for providing quality of service QoS for a service packet. The present invention is defined by the subject-matter of the independent claims. Advantageous embodiments are defined in the dependent claims. In the following, parts of the description and drawings referring to embodiments which are not covered by the claims are not presented as embodiments of the invention, but as examples useful for understanding the invention.

According to a first aspect, a network device is provided, where the network device is located at an egress gateway of an enterprise network and includes:
a receiving module, configured to receive a correspondence between an Internet Protocol IP address segment and a quality of service QoS mark, where the correspondence is sent by a network device located in an operator network, the IP address segment is an IP address segment corresponding to a virtual local area network VLAN in the enterprise network, the QoS mark is a QoS mark allocated by the network device located in the operator network to the IP address segment according to a preconfigured QoS policy, and the QoS policy includes the correspondence between the IP address segment and the QoS mark and a correspondence between the QoS mark and a QoS requirement, where
the receiving module is further configured to receive a service packet sent by a host in the VLAN to the operator network, where a source IP address of the service packet belongs to the IP address segment; and
a processing module, configured to add the QoS mark to the service packet according to the correspondence between the IP address segment and the QoS mark, where the correspondence is received by the receiving module.

With reference to the first aspect, in a first possible implementation manner, the QoS mark includes one of an 802.1P mark, a differentiated services code point DSCP mark, or a type of service ToS mark.

With reference to the first aspect, or the first possible implementation manner of the first aspect, in a second possible implementation manner, the processing module is further configured to add an enterprise VLAN tag to the service packet.

According to a second aspect, a network device is provided, where the network device is located in an operator network and includes:
an obtaining module, configured to obtain an IP address segment corresponding to a virtual local area network VLAN in an enterprise network;
an allocation module, configured to allocate a QoS mark to the IP address segment according to a preconfigured QoS policy, where the QoS policy includes a correspondence between the IP address segment and the QoS mark and a correspondence between the QoS mark and a QoS requirement; and
a sending module, configured to send the correspondence between the IP address segment and the QoS mark to a network device located at an egress gateway of the enterprise network, where
the sending module is further configured to send the correspondence between the QoS mark and the QoS requirement to an access device used for the enterprise network to access the operator network.

With reference to the second aspect, in a first possible implementation manner, the QoS mark includes one of an 802.1P mark, a differentiated services code point DSCP mark, or a type of service ToS mark.

With reference to the second aspect, or the first possible implementation manner of the second aspect, in a second possible implementation manner, the obtaining module is specifically configured to obtain the IP address segment corresponding to the virtual local area network VLAN in the enterprise network from a Dynamic Host Configuration Protocol DHCP server, where the DHCP server is built into the network device located at the egress gateway of the enterprise network or into the network device located in the operator network or the DHCP server is an independent DHCP server, and the IP address segment corresponding to the VLAN in the enterprise network is configured on the DHCP server.

According to a third aspect, a network device is provided, where the network device is an access device used for an enterprise network to access an operator network and includes:
a receiving module, configured to receive a correspondence between a QoS mark and a QoS requirement, where the correspondence is sent by a network device located in the operator network, the QoS mark is a QoS mark allocated, by the network device located in the operator network according to a preconfigured QoS policy, to an IP address segment corresponding to a virtual local area network VLAN in the enterprise network, and the QoS policy includes a correspondence between the IP address segment and the QoS mark and the correspondence between the QoS maker and the QoS requirement, where
the receiving module is further configured to receive a service packet sent by a host in the VLAN to the operator network, where a source IP address of the service packet belongs to the IP address segment, and the service packet includes the QoS mark; and
a processing module, configured to provide QoS for the service packet according to the correspondence between the QoS mark and the QoS requirement.

With reference to the third aspect, in a first possible implementation manner, the service packet further includes an enterprise VLAN tag, and the processing module is specifically configured to provide the QoS for the service packet according to the enterprise VLAN tag and the correspondence between the QoS mark and the QoS requirement.

With reference to the third aspect, or the first possible implementation manner of the third aspect, the network device further includes a conversion module, configured to convert the enterprise VLAN tag to a port VLAN tag according to a physical port; and the processing module is specifically configured to differentiate between different service packets of different enterprises according to the port VLAN tag and the QoS mark, and provide the QoS for the service packet. According to a fourth aspect, a system for providing quality of service QoS for a service packet is provided, and includes the foregoing network device located at the egress gateway of the enterprise network, the foregoing access device used for the enterprise network to access the operator network, and the foregoing network device located in the operator network.

According to a fifth aspect, a method for providing quality of service QoS for a service packet is provided, where the method is applied to a system for providing quality of service QoS for a service packet, and the system includes a first network device, a second network device, and a third network device, where the first network device is located at an egress gateway of an enterprise network, the second network device is located in an operator network, and the third network device is an access device used for the enterprise network to access the operator network, where the method includes:
obtaining, by the second network device, an IP address segment corresponding to a virtual local area network VLAN in the enterprise network;
allocating, by the second network device, a QoS mark to the IP address segment according to a preconfigured QoS policy, where the QoS policy includes a correspondence between the IP address segment and the QoS mark and a correspondence between the QoS mark and a QoS requirement;
sending, by the second network device, the correspondence between the IP address segment and the QoS mark to the first network device; and
sending, by the second network device, the correspondence between the QoS mark and the QoS requirement to the third network device.

With reference to the fifth aspcct, in a first possible implementation manner, the QoS mark includes one of an 802.1P mark, a differentiated services code point DSCP mark, or a type of service ToS mark.

According to the apparatus, the system, and the method for providing quality of service QoS for a packet service that are provided in the embodiments of the present invention, a network device located at an egress gateway of an enterprise network receives a correspondence between an Internet Protocol IP address segment and a quality of service QoS mark, where the correspondence is sent by a network device located in an operator network, the IP address segment is an IP address segment corresponding to a virtual local area network VLAN in the enterprise network, the QoS mark is a QoS mark allocated by the network device located in the operator network to the IP address segment according to a preconfigured QoS policy, and the QoS policy includes the correspondence between the IP address segment and the QoS mark and a correspondence between the QoS mark and a QoS requirement; the network device located at the egress gateway of the enterprise network further receives a service packet sent by a host in the VLAN to the operator network, where a source IP address of the service packet belongs to the IP address segment; and the network device located at the egress gateway of the enterprise network adds the QoS mark to the service packet according to the correspondence between the IP address segment and the QoS mark. In this way, QoS can be better provided for a service packet.

### BRIEF DESCRIPTION OF DRAWINGS

FIG. 1 is a schematic structural diagram of a network device located at an egress gateway of an enterprise network according to an embodiment of the present invention;
FIG. 2 is a schematic structural diagram of a network device located in an operator network according to an embodiment of the present invention;
FIG. 3 is a schematic structural diagram of an access device used for an enterprise network to access an operator network according to an embodiment of the present invention;
FIG. 4 is a schematic structural diagram of a system for providing quality of service QoS for a service packet according to an embodiment of the present invention;
FIG. 5 is a flowchart of a method for providing quality of service QoS for a service packet according to an embodiment of the present invention;
FIG. 6 is a schematic diagram of a system for providing quality of service QoS for a service packet according to an embodiment of the present invention;
FIG. 7 is an interaction flowchart of providing QoS for a service packet according to an embodiment of the present invention;
FIG. 8 is a schematic diagram of a system for providing QoS for a service packet according to an embodiment of the present invention;
FIG. 9 is a schematic diagram of QoS of a network device located at an egress gateway of an enterprise network according to an embodiment of the present invention;
FIG. 10 is a schematic diagram of QoS of an access device used for an enterprise network to access an operator network according to an embodiment of the present invention;
FIG. 11 is a schematic structural diagram of a network device located in an operator network according to an embodiment of the present invention;
FIG. 12 is a schematic structural diagram of a network device located at an egress gateway of an enterprise network according to an embodiment of the present invention; and
FIG. 13 is a schematic structural diagram of an access device used for an enterprise network to access an operator network according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The following further describes the embodiments of the present invention in detail with reference to this specification.

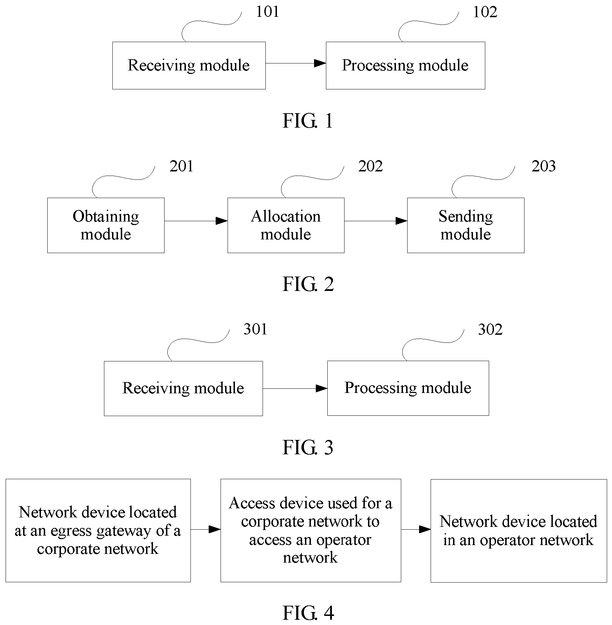

As shown in FIG. 1, an embodiment of the present invention provides a network device, where the network device is located at an egress gateway of an enterprise network and includes:
a receiving module 101, configured to receive a correspondence between an Internet Protocol IP address segment and a quality of service QoS mark, where the correspondence is sent by a network device located in an operator network, the IP address segment is an IP address segment corresponding to a virtual local area network VLAN in the enterprise network, the QoS mark is a QoS mark allocated by the network device located in the operator network to the IP address segment according to a preconfigured QoS policy, and the QoS policy includes the correspondence between the IP address segment and the QoS mark and a correspondence between the QoS mark and a QoS requirement, where
the receiving module 101 is further configured to receive a service packet sent by a host in the VLAN to the operator network, where a source IP address of the service packet belongs to the IP address segment; and
a processing module 102, configured to add the QoS mark to the service packet according to the correspondence between the IP address segment and the QoS mark, where the correspondence is received by the receiving module 101.

According to the apparatus, the system, and the method for providing quality of service QoS for a packet service that are provided in the embodiments of the present invention, a network device located at an egress gateway of an enterprise network receives a correspondence between an Internet Protocol IP address segment and a quality of service QoS mark, where the correspondence is sent by a network device located in an operator network, the IP address segment is an IP address segment corresponding to a virtual local area network VLAN in the enterprise network, the QoS mark is a QoS mark allocated by the network device located in the operator network to the IP address segment according to a preconfigured QoS policy, and the QoS policy includes the correspondence between the IP address segment and the QoS mark and a correspondence between the QoS mark and a QoS requirement; the network device located at the egress gateway of the enterprise network further receives a service packet sent by a host in the VLAN to the operator network, where a source IP address of the service packet belongs to the IP address segment; and the network device located at the egress gateway of the enterprise network adds the QoS mark to the service packet according to the correspondence between the IP address segment and the QoS mark. In this way, QoS can be better provided for a service packet.

Optionally, the QoS mark includes one of an 802.1P mark, a differentiated services code point (Differentiated Services Code Point, DSCP) mark, or a type of service (Type of Service, ToS) mark.

Optionally, the processing module 102 is further configured to add an enterprise VLAN tag to the service packet.

As shown in FIG. 2, an embodiment of the present invention further provides a network device, where the network device is located in an operator network and includes:
an obtaining module 201, configured to obtain an IP address segment corresponding to a virtual local area network VLAN in an enterprise network;
an allocation module 202, configured to allocate a QoS mark to the IP address segment according to a preconfigured QoS policy, where the QoS policy includes a correspondence between the IP address segment and the QoS mark and a correspondence between the QoS mark and a QoS requirement; and
a sending module 203, configured to send the correspondence between the IP address segment and the QoS mark to a network device located at an egress gateway of the enterprise network, where
the sending module 203 is further configured to send the correspondence between the QoS mark and the QoS requirement to an access device used for the enterprise network to access the operator network.

Optionally, the QoS mark includes one of an 802.1P mark, a differentiated services code point DSCP mark, or a type of service ToS mark.

Optionally, the sending module 203 is specifically configured to send the correspondence between the QoS mark and the QoS requirement to the third network device by using an operator network management system.

Optionally, the sending module 203 is configured to send the correspondence between the IP address segment and the QoS mark to the network device located at the egress gateway of the enterprise network. A new type of message may be defined (for example, each field and a specific value of the field that are included in the message are defined in an XML format by using an XMPP protocol) and sent, and content of the message includes:
a message sender ID, marking a message sender;
a message receiver ID, marking a message receiver;
a structure quantity, defining a quantity of correspondences between IP address segments and QoS marks, where the correspondences are included in the message; and
a correspondence structure, describing a specific correspondence further including an IP network segment address, a mask, a QoS mark type (such as 802.1P, DSCP, or ToS), and a QoS mark value.

For example:

```
        <message to='Enterprise CPE 1' from='Virtualrouter 1'>
                </items-num=3/>
                <item='QoS-information1'>
                     < subnet >'192.168.1.0'</ subnet >
                     < mask >'255.255.255.0'</ mask >
                     < qos-type >'802.1p'</ qos-type >
                     < mark-value >'4'</ mark-value >
                </item>
               <item='QoS-information2'>
                     < subnet >'192.168.2.0'</ subnet >
                     < mask >'255.255.255.0'</ mask >
                     < qos-type >'DSCP'</ qos-type >
                     < mark-value >'20'</ mark-value >
                </item>
                <item='QoS-information3'>
                     < subnet >'192.168.3.0'</ subnet >
                     < mask >'255.255.255.0'</ mask >
                     < qos-type >'ToS'</ qos-type >
                     < mark-value >'10'</ mark-value >
                </item>
        </message>
```

Optionally, the sending module 203 is further configured to send the correspondence between the QoS mark and the QoS requirement to the access device used for the enterprise network to access the operator network. Anew type of message may be defined (for example, each field and a specific value of the field that are included in the message are defined in an XML format by using an XMPP protocol) and sent, and content of the message includes:
a message sender ID, marking a message sender;
a message receiver ID, marking a message receiver;
a structure quantity, defining a quantity of correspondences between QoS marks and QoS requirements, where the correspondences are included in the message; and
a correspondence structure, describing a specific correspondence further including a QoS mark type (such as 802.1P, DSCP, or ToS), a QoS mark value, a priority, an assured bandwidth (cir), a peak information rate (pir), and the like.

For example:

```
        <message to='Manager server 1' from='Virtual router 1'>
                </items-num=3/>
                <item='QoS-requirement 1'>
                     < qos-type >'802. 1p'</ qos-type >
                     < mark-value >'4'</ mark-value >
                       <priority>'1'</ priority >
                       <cir>'1024'</ cir >
                       <pir>'10240'</ pir >
                </item>
               <item=' QoS-requirement 2'>
                     < qos-type >'DSCP'</ qos-type >
                     < mark-value >'20'</ mark-value >
        <priority>'2'</ priority >
                       <cir>'1024'</ cir >
                       <pir>'10240'</ pir >
                </item>
                <item=' QoS-requirement 3'>
                     < qos-type >'ToS'</ qos-type >
                     < mark-value >' 10'</ mark-value >
        <priority>'3'</ priority >
                       <cir>'1024'</ cir >
                       <pir>'1 0240'</ pir >
                </item>
        </message>
```

Optionally, the obtaining module 202 is specifically configured to obtain the IP address segment corresponding to the virtual local area network VLAN in the enterprise network from a Dynamic Host Configuration Protocol DHCP server, where the DHCP server is built into the network device located at the egress gateway of the enterprise network or into the network device located in the operator network or the DHCP server is an independent DHCP server, and the IP address segment corresponding to the VLAN in the enterprise network is configured on the DHCP server. If the DHCP server is built into a first network device or the DHCP server is an independent DHCP server, the IP address segment further needs to be sent to a second network device. A new type of message may be defined (for example, each field and a specific value of the field that are included in the message are defined in an XML format by using an XMPP protocol) and sent, and content of the message includes:
a message sender ID, marking a message sender;
a message receiver ID, marking a message receiver;
a structure quantity, defining a quantity of correspondences between VLANs and allocated IP address segments, where the correspondences are included in the message; and
a correspondence structure, describing a specific correspondence further including a VLAN ID, an allocated IP network segment, a subnet mask, and the like.

For example:

```
        <message to=' Virtual router 1' from='DHCP Server1'>
                </items-num=3/>
                <item='vlan-sub1'>
                     < vlan-id >'100'</ vlan-id >
                     < subnet >'192.168.1.0'</ subnet >
                       < mask>'255.255.255.0'</ mask >
                </item>
               <item='QoS-requirement 2'>
                     < vlan-id >'200'</ vlan-id >
                     < subnet >'192.168.2.0'</ subnet >
                       < mask>'255.255.255.0'</ mask >
                </item>
                <item='QoS-requirement 3'>
                     < vlan-id >'300'</ vlan-id >
                     < subnet >'192.168.3.0'</ subnet >
                       < mask>'255.255.255.0'</ mask >
                </item>
        </message>
```

As shown in FIG. 3, an embodiment of the present invention further provides a network device, where the network device is an access device used for an enterprise network to access an operator network and includes:
a receiving module 301, configured to receive a correspondence between a QoS mark and a QoS requirement, where the correspondence is sent by a network device located in the operator network, the QoS mark is a QoS mark allocated, by the network device located in the operator network according to a preconfigured QoS policy, to an IP address segment corresponding to a virtual local area network VLAN in the enterprise network, and the QoS policy includes a correspondence between the IP address segment and the QoS mark and the correspondence between the QoS maker and the QoS requirement, where
the receiving module 301 is further configured to receive a service packet sent by a host in the VLAN to the operator network, where a source IP address of the service packet belongs to the IP address segment, and the service packet includes the QoS mark; and
a processing module 302, configured to provide QoS for the service packet according to the correspondence between the QoS mark and the QoS requirement.

Optionally, the service packet further includes an enterprise VLAN tag, and the processing module 302 is specifically configured to provide the QoS for the service packet according to the enterprise VLAN tag and the correspondence between the QoS mark and the QoS requirement. Optionally, the network device further includes a conversion module, configured to convert the enterprise VLAN tag to a port VLAN tag according to a physical port; and the processing module 302 is specifically configured to differentiate between different service packets of different enterprises according to the port VLAN tag and the QoS mark, and provide the QoS for the service packet.

As shown in FIG. 4, an embodiment of the present invention further provides a system for providing quality of service QoS for a service packet, where the system includes the foregoing network device located at the egress gateway of the enterprise network, the foregoing access device used for the enterprise network to access the operator network, and the foregoing network device located in the operator network.

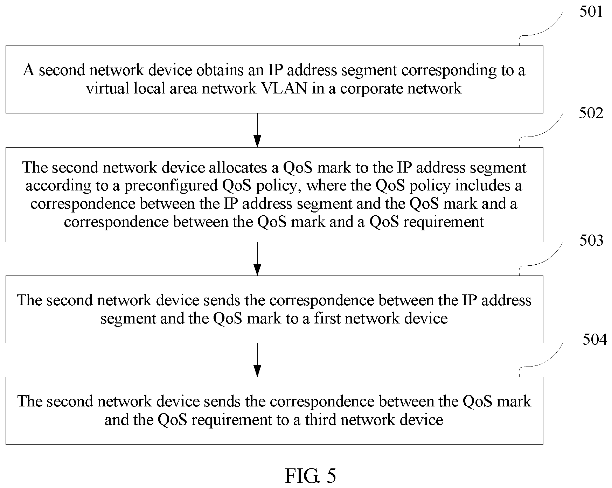

As shown in FIG. 5, an embodiment of the present invention further provides a method for providing quality of service QoS for a service packet. The method is applied to a system for providing quality of service QoS for a service packet, and the system includes a first network device, a second network device, and a third network device. The first network device is located at an egress gateway of an enterprise network, the second network device is located in an operator network, and the third network device is an access device used for the enterprise network to access the operator network. The method includes the following steps:
501. The second network device obtains an IP address segment corresponding to a virtual local area network VLAN in the enterprise network.
502. The second network device allocates a QoS mark to the IP address segment according to a preconfigured QoS policy, where the QoS policy includes a correspondence between the IP address segment and the QoS mark and a correspondence between the QoS mark and a QoS requirement.
503. The second network device sends the correspondence between the IP address segment and the QoS mark to the first network device.
504. The second network device sends the correspondence between the QoS mark and the QoS requirement to the third network device.

Optionally, the QoS mark includes one of an 802.1P mark, a differentiated services code point DSCP mark, or a type of service ToS mark.

Optionally, the method further includes: sending an enterprise VLAN tag to the third network device, so that the third network device provides QoS for the service packet according to the enterprise VLAN tag and the correspondence between the QoS mark and the QoS requirement. Optionally, the sending the correspondence between the QoS mark and the QoS requirement to the third network device specifically includes: sending the correspondence between the QoS mark and the QoS requirement to the third network device by using an operator network management system.

Optionally, the second network device sends the correspondence between the IP address segment and the QoS mark to the first network device. A new type of message may be defined (for example, each field and a specific value of the field that are included in the message are defined in an XML format by using an XMPP protocol) and sent, and content of the message includes:
a message sender ID, marking a message sender;
a message receiver ID, marking a message receiver;
a structure quantity, defining a quantity of correspondences between IP address segments and QoS marks, where the correspondences are included in the message; and
a correspondence structure, describing a specific correspondence further including an IP network segment address, a mask, a QoS mark type (such as 802.1P, DSCP, or ToS), and a QoS mark value.

For example:

```
        <message to='Enterprise CPE 1' from='Virtualrouter 1'>
                </items-num=3/>
                <item='QoS-information1'>
                     < subnet >'192.168.1.0'</ subnet >
                     < mask >'255.255.255.0'</ mask >
                     < qos-type >'802.1p'</ qos-type >
                     < mark-value >'4'</ mark-value >
                </item>
               <item='QoS-information2'>
                     < subnet >'192.168.2.0'</ subnet >
                     < mask >'255.255.255.0'</ mask >
                     < qos-type >'DSCP'</ qos-type >
                     < mark-value >'20'</ mark-value >
                </item>
                <item='QoS-information3'>
                     < subnet >'192.168.3.0'</ subnet >
                     < mask >'255.255.255.0'</ mask >
                     < qos-type >'ToS'</ qos-type >
                     < mark-value >'10'</ mark-value >
                </item>
        </message>
```

Optionally, the second network device sends the correspondence between the QoS mark and the QoS requirement to the third network device. A new type of message may be defined (for example, each field and a specific value of the field that are included in the message are defined in an XML format by using an XMPP protocol) and sent, and content of the message includes:
a message sender ID, marking a message sender;
a message receiver ID, marking a message receiver;
a structure quantity, defining a quantity of correspondences between QoS marks and QoS requirements, where the correspondences are included in the message; and
a correspondence structure, describing a specific correspondence further including a QoS mark type (such as 802.1P, DSCP, or ToS), a QoS mark value, a priority, an assured bandwidth (cir), a peak information rate (pir), and the like.

For example:

```
        <message to='Manager server 1' from='Virtual router 1'>
                </items-num=3/>
                <item='QoS-requirement 1'>
                     < qos-type >'802.1p'</ qos-type >
                     < mark-value >'4'</ mark-value >
                       <priority>'1'</ priority >
                       <cir>'1024'</ cir >
                       <pir>'1 0240'</ pir >
                </item>
               <item='QoS-requirement 2'>
                     < qos-type >'DSCP'</ qos-type >
                     < mark-value >'20'</ mark-value >
        <priority>'2'</ priority >
                       <cir>'1024'</ cir >
                       <pir>'10240'</ pir >
                </item>
                <item=' QoS-requirement 3'>
                     < qos-type >'ToS'</ qos-type >
                     < mark-value >'10'</ mark-value >
        <priority>'3'</ priority >
                       <cir>'1024'</ cir >
                       <pir>'1 0240'</ pir >
                </item>
        </message>
```

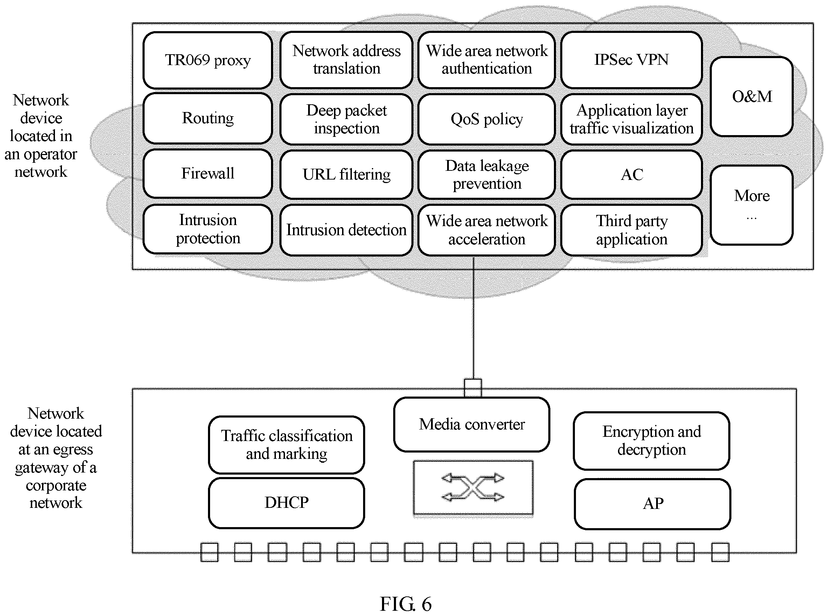

An embodiment of the present invention is further described in the following with reference to FIG. 6.

A system for providing QoS for a service packet according to this embodiment of the present invention includes two parts: a network device located at an egress gateway of an enterprise network and a network device located in an operator network. The system provides an enterprise with various basic and value-added services such as network access, security, and WAN acceleration, and function modules of the system are shown in FIG. 6.

The network device located at the egress gateway of the enterprise network may include a basic Dynamic Host Configuration Protocol (Dynamic Host Configuration Protocol, DHCP) function, a layer 2 or layer 3 switching function, and a traffic classification and marking function, and may include another function according to a service requirement. For example, an encryption and decryption function is included according to a virtual private network (Virtual Private Network, VPN) requirement, an access point (Access Point, AP) function is included according to a wireless local area network (Wireless Local Area Networks, WLAN) requirement, and an access control list (Access Control List, ACL) function is included according to an internal flow control requirement. The network device located in the operator network may include: basic functions such as routing and forwarding, network address translation (Network Address Translation, NAT), wide area network (Wide Area Network, WAN) authentication, and an IP address; value-added service functions such as a VPN, a firewall, and WAN acceleration; and an open interface used by a third party to add a new function. The functions of the network device located at the egress gateway of the enterprise network and the network device located in the operator network in this embodiment of the present invention are conventionally completed by an enterprise egress gateway. In this embodiment of the present invention, a part of the functions is completed by the network device located in the operator network. The network device located in the operator network may be a virtual router that exists in a software form on an operator network device (such as a broadband remote access server (Broadband Remote Access Server, BRAS for short)). An enterprise needs to use only a simple switching device to access a network, and multiple communication and security requirements of the enterprise can be met by using various functions of the virtual router.

A QoS policy for an enterprise service packet is preconfigured on the network device located in the operator network, and the QoS policy includes a correspondence between an IP address segment and a QoS mark and a correspondence between the QoS mark and a QoS requirement. The QoS requirement includes bandwidths, priorities, and the like that are allocated to different service traffic. The IP address segment includes an IP address segment corresponding to each virtual local area network VLAN of each enterprise. The QoS mark includes one of an 802.1P mark, a DSCP mark, or a ToS mark. When layer 2 forwarding exists between the network device located at the egress gateway of the enterprise network and the network device located in the operator network, the QoS mark includes the 802.1P mark. When layer 3 forwarding exists between the network device located at the egress gateway of the enterprise network and the network device located in the operator network, the QoS mark includes the DSCP mark or the ToS mark.

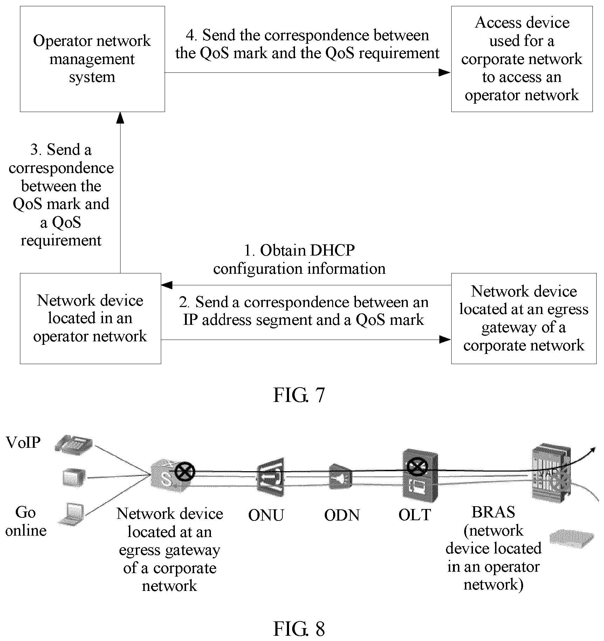

An interaction procedure of providing QoS for a service packet according to an embodiment of the present invention is shown in FIG. 7.

Step 1: The network device located in an operator network obtains an IP address segment corresponding to a virtual local area network VLAN in the enterprise network from a Dynamic Host Configuration Protocol DHCP server, where the DHCP server is built into the network device located at an egress gateway of the enterprise network or into the network device located in the operator network or the DHCP server is an independent DHCP server, and the IP address segment corresponding to the VLAN in the enterprise network is configured on the DHCP server.

Step 2: The network device located in the operator network allocates a QoS mark to the IP address segment according to a preconfigured QoS policy, and sends a correspondence between the IP address segment and the QoS mark to the network device located at the egress gateway of the enterprise network, so that the network device located at the egress gateway of the enterprise network adds the QoS mark to a service packet according to the correspondence between the IP address segment and the QoS mark.

Step 3: The network device located in the operator network sends a correspondence between the QoS mark and a QoS requirement to an operator network management system.

Step 4: The operator network management system sends the correspondence between the QoS mark and the QoS requirement to an access device used for the enterprise network to access the operator network, so that the access device used for the enterprise network to access the operator network provides QoS for the service packet according to the correspondence between the QoS mark and the QoS requirement.

As shown in FIG. 8, in a system for providing QoS for a service packet, the access device used for the enterprise network to access the operator network may include an optical network unit (Optical Network Unit, ONU) and an optical line terminal (Optical Line Terminal, OLT), or may include a digital subscriber line access multiplexer (Digital Subscriber Line Access Multiplexer, DSLAM), or may include another switch, or the like.

For a service packet sent by the operator network to the enterprise network, NAT translation is first performed on the network device located in the operator network, to replace a destination IP address, and then different QoSs are provided according to different IP address segments.

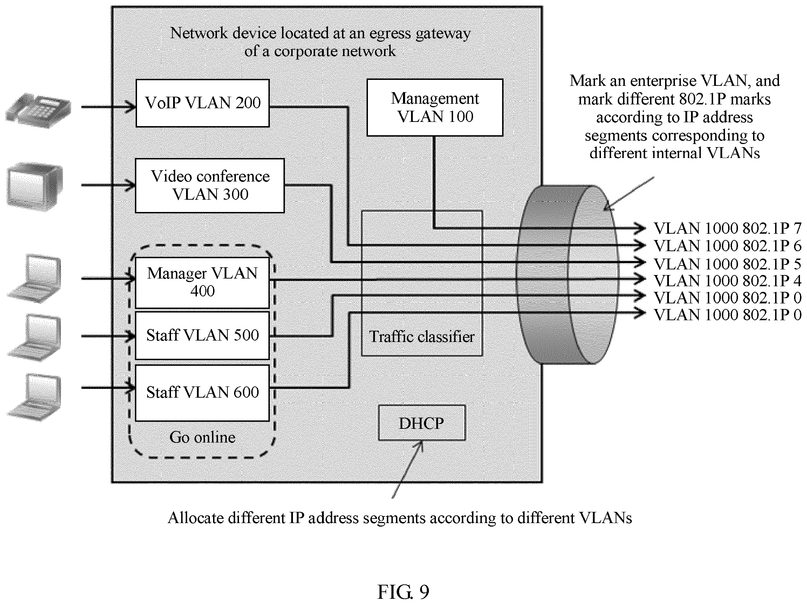

As shown in FIG. 9, FIG. 9 shows QoS of a network device located at an egress gateway of an enterprise network. First, a DHCP server that is built into the network device located at the egress gateway of the enterprise network allocates an IP address segment to a virtual local area network VLAN in the enterprise network. Because there are usually multiple terminals in each VLAN, the DHCP server allocates an IP address segment to each VLAN, and the IP address segment is multiple IP addresses within a particular range. Different VLANs are corresponding to different services, that is, different services, VLANs, and IP address segments have a correspondence. Then, the network device located at the egress gateway of the enterprise network sends the IP address segment to a network device located in an operator network, and receives a correspondence between the IP address segment and a QoS mark, where the correspondence is sent by the network device located in the operator network. Then, the network device located at the egress gateway of the enterprise network receives a service packet sent by a host in the VLAN to the operator network, where a source IP address of the service packet belongs to the IP address segment; and adds the QoS mark to the service packet according to the IP address segment to which the source IP address of the service packet belongs, that is, different service packets in a same enterprise can be differentiated according to the QoS mark. Alternatively, the network device located at the egress gateway of the enterprise network may add an enterprise VLAN tag to the service packet, and a same enterprise VLAN tag may be added to a same enterprise, such as a VLAN 1000 in FIG. 9.

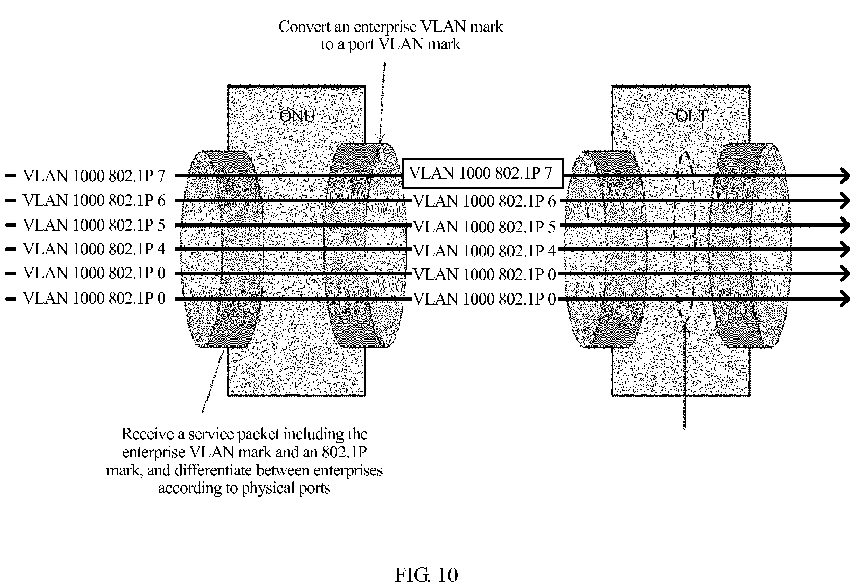

As shown in FIG. 10, FIG. 10 shows QoS of an access device used for an enterprise network to access an operator network. A correspondence between a QoS mark and a QoS requirement is stored on the access device. The correspondence is sent by a network device located in the operator network to an operator network management system, and is sent by the operator network management system to the access device. An enterprise VLAN tag sent by the operator network management system is also stored on the access device. If the access device includes an ONU and an OLT, the enterprise VLAN tag may be converted on the ONU to a port VLAN tag according to a physical port, to differentiate between different enterprises. For example, an enterprise VLAN tag VLAN 1000 of an enterprise is converted to a port VLAN tag VLAN 10 according to a physical receive port. Different types of service packets from different enterprises are differentiated on the OLT according to the converted port VLAN tag and the QoS mark, and QoS is provided for the service packets. That the ONU cooperates with the OLT to complete QoS is used as an example herein. Alternatively, QoS may be provided on the ONU or on the OLT separately. For another access device such as a DSLAM, a QoS method is similar. An 802.1P mark is used as an example of the QoS mark in both FIG. 9 and FIG. 10, and another QoS mark is similar.

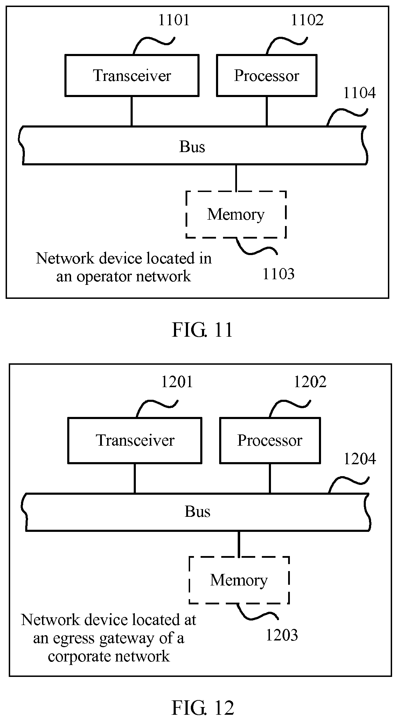

An embodiment of the present invention further provides a network device located in an operator network. As shown in FIG. 11, the network device includes: a transceiver 1101, a processor 1102, a memory 1103, and a bus 1104. The transceiver 1101, the processor 1102, and the memory 1103 are connected by using the bus 1104 to perform mutual communication.

The bus 1104 may be an Industry Standard Architecture (Industry Standard Architecture, ISA) bus, a Peripheral Component Interconnect (Peripheral Component, PCI) bus, an Extended Industry Standard Architecture (Extended Industry Standard Architecture, EISA) bus, or the like. The bus 1104 may be categorized into an address bus, a data bus, a control bus, and the like. For ease of representation, only one line is used in the figure for representation, but it does not indicate that there is only one bus or one type of bus.

The memory 1103 is configured to store program code, and the program code includes an operation instruction. The memory 1103 may include a high-speed random access memory (random access memory, RAM), or may include a non-volatile memory (non-volatile memory) such as a disk memory.

The processor 1102 may be a central processing unit (Central Processing Unit, CPU), or an application specific integrated circuit (Application Specific Integrated Circuit, ASIC), or is configured as one or more integrated circuits that implement this embodiment of the present invention.

The processor 1102 is configured to invoke the program code in the memory 1103, so as to execute the following operations:
obtaining an IP address segment corresponding to a virtual local area network VLAN in an enterprise network; and
allocating a QoS mark to the IP address segment according to a preconfigured QoS policy, where the QoS policy includes a correspondence between the IP address segment and the QoS mark and a correspondence between the QoS mark and a QoS requirement.

The transceiver 1101 is configured to send the correspondence between the IP address segment and the QoS mark to a network device located at an egress gateway of the enterprise network. The transceiver 1101 is further configured to send the correspondence between the QoS mark and the QoS requirement to an access device used for the enterprise network to access the operator network.

As shown in FIG. 12, an embodiment of the present invention further provides a network device located at an egress gateway of an enterprise network, where the network device includes:
a transceiver 1201, a processor 1202, a memory 1203, and a bus 1204. The transceiver 1201, the processor 1202, and the memory 1203 are connected by using the bus 1204 to perform mutual communication.

The bus 1204 may be an Industry Standard Architecture (Industry Standard Architecture, ISA) bus, a Peripheral Component Interconnect (Peripheral Component, PCI) bus, an Extended Industry Standard Architecture (Extended Industry Standard Architecture, EISA) bus, or the like. The bus 1204 may be categorized into an address bus, a data bus, a control bus, and the like. For ease of representation, only one line is used in the figure for representation, but it does not indicate that there is only one bus or one type of bus.

The memory 1203 is configured to store program code, and the program code includes an operation instruction. The memory 1203 may include a high-speed random access memory (random access memory, RAM), or may include a non-volatile memory (non-volatile memory) such as a disk memory.

The processor 1202 may be a central processing unit (Central Processing Unit, CPU), or an application specific integrated circuit (Application Specific Integrated Circuit, ASIC), or is configured as one or more integrated circuits that implement this embodiment of the present invention.

The transceiver 1201 is configured to receive a correspondence between an Internet Protocol IP address segment and a quality of service QoS mark, where the correspondence is sent by a network device located in an operator network, the IP address segment is an IP address segment corresponding to a virtual local area network VLAN in the enterprise network, the QoS mark is a QoS mark allocated by the network device located in the operator network to the IP address segment according to a preconfigured QoS policy, and the QoS policy includes the correspondence between the IP address segment and the QoS mark and a correspondence between the QoS mark and a QoS requirement.

The transceiver 1201 is further configured to receive a service packet sent by a host in the VLAN to the operator network, where a source IP address of the service packet belongs to the IP address segment.

The processor 1202 is configured to invoke the program code in the memory 1203, so as to execute the following operation:
adding the QoS mark to the service packet according to the correspondence between the IP address segment and the QoS mark, where the correspondence is received by the transceiver 1201.

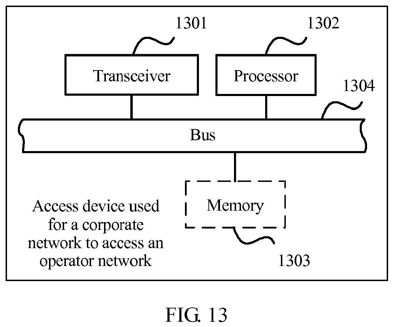

As shown in FIG. 13, an embodiment of the present invention further provides a network device, where the network device is an access device used for an enterprise network to access an operator network and includes:
a transceiver 1301, a processor 1302, a memory 1303, and a bus 1304. The transceiver 1301, the processor 1302, and the memory 1303 are connected by using the bus 1304 to perform mutual communication.

The bus 1304 may be an Industry Standard Architecture (Industry Standard Architecture, ISA) bus, a Peripheral Component Interconnect (Peripheral Component, PCI) bus, an Extended Industry Standard Architecture (Extended Industry Standard Architecture, EISA) bus, or the like. The bus 1304 may be categorized into an address bus, a data bus, a control bus, and the like. For ease of representation, only one line is used in the figure for representation, but it does not indicate that there is only one bus or one type of bus.

The memory 1303 is configured to store program code, and the program code includes an operation instruction. The memory 1303 may include a high-speed random access memory (random access memory, RAM), or may include a non-volatile memory (non-volatile memory) such as a disk memory.

The processor 1302 may be a central processing unit (Central Processing Unit, CPU), or an application specific integrated circuit (Application Specific Integrated Circuit, ASIC), or is configured as one or more integrated circuits that implement this embodiment of the present invention.

The transceiver 1301 is configured to receive a correspondence between a QoS mark and a QoS requirement, where the correspondence is sent by a network device located in the operator network, the QoS mark is a QoS mark allocated, by the network device located in the operator network according to a preconfigured QoS policy, to an IP address segment corresponding to a virtual local area network VLAN in the enterprise network, and the QoS policy includes a correspondence between the IP address segment and the QoS mark and the correspondence between the QoS maker and the QoS requirement.

The transceiver 1301 is further configured to receive a service packet sent by a host in the VLAN to the operator network, where a source IP address of the service packet belongs to the IP address segment, and the service packet includes the QoS mark.

The processor 1302 is configured to invoke the program code in the memory 1303, so as to execute the following operation:
providing QoS for the service packet according to the correspondence between the QoS mark and the QoS requirement.

Function implementation of the apparatus in this embodiment of the present invention is based on a same inventive concept as the method, reference may be made to the method, and details arc not described herein again.

According to the apparatus, the system, and the method for providing quality of service QoS for a packet service that are provided in the embodiments of the present invention, a network device located at an egress gateway of an enterprise network receives a correspondence between an Internet Protocol IP address segment and a quality of service QoS mark, where the correspondence is sent by a network device located in an operator network, the IP address segment is an IP address segment corresponding to a virtual local area network VLAN in the enterprise network, the QoS mark is a QoS mark allocated by the network device located in the operator network to the IP address segment according to a preconfigured QoS policy, and the QoS policy includes the correspondence between the IP address segment and the QoS mark and a correspondence between the QoS mark and a QoS requirement; the network device located at the egress gateway of the enterprise network further receives a service packet sent by a host in the VLAN to the operator network, where a source IP address of the service packet belongs to the IP address segment; and the network device located at the egress gateway of the enterprise network adds the QoS mark to the service packet according to the correspondence between the IP address segment and the QoS mark. In this way, QoS can be better provided for a service packet.

A person of ordinary skill in the art may be aware that, in combination with the examples described in the embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and module, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely exemplary. For example, the module division is merely logical function division and may be other division in actual implementation. For example, multiple modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on multiple network modules. Some or all of the modules may be selected according to actual needs to achieve the objectives of the solutions of the embodiments.

In addition, functional modules in the embodiments of the present invention may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Therefore, the protection scope of the present invention shall be subject to the protection scope of the claims.

## Claims

1. A system comprising a network device located in an operator network and a network device located at an egress gateway of an enterprise network, wherein the network device located at the egress gateway of the enterprise network comprises:
a DHCP server built into the network device located at the egress gateway, configured to allocate an Internet Protocol, IP, address segment to a virtual local area network, VLAN, in the enterprise network, wherein different VLANs are corresponding to different services, and different services, VLANs, and IP address segments are corresponding, wherein the network device located at the egress gateway is configured to send the IP address segment to the network device located in the operator network,
a receiving module (101), configured to receive a correspondence between the IP address segment and a quality of service, QoS, mark, wherein the correspondence is sent by the network device located in the operator network, wherein
the QoS mark is a QoS mark allocated by the network device located in the operator network to the IP address segment according to a preconfigured QoS policy, and the QoS policy comprises the correspondence between the IP address segment and the QoS mark and a further correspondence between the QoS mark and a QoS requirement, wherein
the receiving module is further configured to receive a service packet sent by a host in the VLAN of the enterprise network to be transmitted to the operator network, wherein a source IP address of the service packet belongs to the IP address segment; and
a processing module (102), configured to add the QoS mark to the service packet according to the correspondence between the IP address segment and the QoS mark.

2. The system according to claim 1, wherein the QoS mark comprises one of an 802.1P mark, a differentiated services code point DSCP mark, or a type of service ToS mark.

3. The system according to claim 1 or 2, wherein the processing module is further configured to add an enterprise VLAN tag to the service packet.

4. The system according to one of the proceeding claims, wherein the network device located in the operator network comprises:
an obtaining module (201), configured to obtain the IP address segment corresponding to the virtual local area network VLAN in the enterprise network;
an allocation module (202), configured to allocate the quality of service, QoS, mark to the IP address segment according to the preconfigured QoS policy; and
a sending module (203), configured to send the correspondence between the IP address segment and the QoS mark to the network device located at the egress gateway of the enterprise network, wherein
the sending module is further configured to send the further correspondence between the QoS mark and the QoS requirement to an access device used for the enterprise network to access the operator network.

5. The system according to claim 4 further comprising the access device used for the enterprise network to access the operator network, wherein the access device comprises:
a receiving module (301), configured to receive the further correspondence between the quality of service, QoS, mark and the QoS requirement, wherein
the receiving module is further configured to receive the service packet sent by the host in the VLAN of the enterprise network to be transmitted to the operator network, wherein the source IP address of the service packet belongs to the IP address segment, and the service packet comprises the QoS mark; and
a processing module (302), configured to provide QoS for the service packet according to the further correspondence between the QoS mark and the QoS requirement.

6. The system according to claim 5, wherein the service packet further comprises an enterprise VLAN tag, and the processing module of the access device is specifically configured to provide the QoS for the service packet according to the enterprise VLAN tag and the further correspondence between the QoS mark and the QoS requirement.

7. The system according to claim 6, wherein the access device further comprises a conversion module, configured to convert the enterprise VLAN tag to a port VLAN tag according to a physical port; and the processing module of the access device is specifically configured to differentiate between different service packets of different enterprises according to the port VLAN tag and the QoS mark, and provide QoS for the service packet.

8. A method for providing quality of service, QoS, for a service packet, wherein the method is applied to a system for providing quality of service QoS for a service packet, and the system comprises a first network device, a second network device, and a third network device, wherein the first network device is located at an egress gateway of an enterprise network, the second network device is located in an operator network, and the third network device is an access device used for the enterprise network to access the operator network, wherein a DHCP server is built into the first network device and allocates an Internet Protocol, IP, address segment to a virtual local area network, VLAN, in the enterprise network, wherein different VLANs are corresponding to different services, and different services, VLANs, and IP address segments are corresponding, wherein the method comprises:
sending, by the first network device, the IP address segment to the second network device; obtaining (501), by the second network device, the IP address segment corresponding to the VLAN in the enterprise network;
allocating (502), by the second network device, a QoS mark to the IP address segment according to a preconfigured QoS policy, wherein the QoS policy comprises a correspondence between the IP address segment and the QoS mark and a further correspondence between the QoS mark and a QoS requirement;
sending (503), by the second network device, the correspondence between the IP address segment and the QoS mark to the first network device; and
sending (504), by the second network device, the further correspondence between the QoS mark and the QoS requirement to the third network device;
receiving, by the first network device, the correspondence between the IP address segment and the QoS mark;
receiving, by the first network device, a service packet sent by a host in the VLAN of the enterprise network to be transmitted to the operator network, wherein a source IP address of the service packet belongs to the IP address segment; adding, by the first network device, the QoS mark to the service packet according to the correspondence between the IP address segment and the QoS mark.

9. A network device, located at an egress gateway of an enterprise network, comprising:
a DHCP server built into the network device located at the egress gateway, configured to allocate an Internet Protocol, IP, address segment to a virtual local area network, VLAN, in the enterprise network, wherein different VLANs are corresponding to different services, and different services, VLANs, and IP address segments have a correspondence, wherein the network device located at the egress gateway is configured to send the IP address segment to a network device located in an operator network;
a receiving module (101), configured to receive a correspondence between the IP address segment and a quality of service, QoS, mark, wherein the correspondence is sent by the network device located in the operator network, wherein the receiving module is further configured to receive a service packet sent by a host in the VLAN of the enterprise network to be transmitted to the operator network, wherein a source IP address of the service packet belongs to the IP address segment; and
a processing module (102), configured to add the QoS mark to the service packet according to the correspondence between the IP address segment and the QoS mark.

10. The network device according to claim 9, wherein the QoS mark comprises one of an 802.1P mark, a differentiated services code point DSCP mark, or a type of service ToS mark.

11. The network device according to claim 9 or 10, wherein the processing module is further configured to add an enterprise VLAN tag to the service packet.

## Patentansprüche

1. System, das eine Netzvorrichtung, die sich in einem Betreibernetz befindet, und eine Netzvorrichtung, die sich bei einem Ausgangs-Gateway eines Firmennetzes befindet, umfasst, wobei die Netzvorrichtung, die sich bei dem Ausgangs-Gateway des Firmennetzes befindet, Folgendes umfasst:
einen in die Netzvorrichtung, die sich bei dem Ausgangs-Gateway befindet, eingebauten DHCP-Server, der zum Zuordnen eines "Internet-Protocol"- bzw. IP-Adressensegments zu einem virtuellen lokalen Netz, VLAN (Virtual Local Area Network), in dem Firmennetz konfiguriert ist, wobei verschiedene VLANs verschiedenen Diensten entsprechen und verschiedene Dienste, VLANs und IP-Adressensegmente einander entsprechen, wobei die Netzvorrichtung, die sich bei dem Ausgangs-Gateway befindet, zum Senden des IP-Adressensegments an die Netzvorrichtung konfiguriert ist, die sich in dem Betreibernetz befindet,
ein Empfangsmodul (101), das zum Empfangen einer Entsprechung zwischen dem IP-Adressensegment und einem Dienstgüte- bzw. QoS(Quality of Service)-Kennzeichen konfiguriert ist, wobei die Entsprechung durch die Netzvorrichtung gesendet wird, die sich in dem Betreibernetz befindet, wobei das QoS-Kennzeichen ein QoS-Kennzeichen ist, das durch die Netzvorrichtung, die sich in dem Betreibernetz befindet, gemäß einer vorkonfigurierten QoS-Richtlinie dem IP-Adressensegment zugeordnet wird, und die QoS-Richtlinie die Entsprechung zwischen dem IP-Adressensegment und dem QoS-Kennzeichen und eine weitere Entsprechung zwischen dem QoS-Kennzeichen und einer QoS-Anforderung umfasst,
wobei
das Empfangsmodul ferner zum Empfangen eines durch einen Host in dem VLAN des Firmennetzes gesendeten Dienstpakets konfiguriert ist, das an das Betreibernetz zu übertragen ist, wobei eine Quellen-IP-Adresse des Dienstpakets zu dem IP-Adressensegment gehört; und
ein Verarbeitungsmodul (102), das zum Hinzufügen eines QoS-Kennzeichens zu dem Dienstpaket gemäß der Entsprechung zwischen dem IP-Adressensegment und dem QoS-Kennzeichen konfiguriert ist.

2. System nach Anspruch 1, wobei das QoS-Kennzeichen ein 802.1P-Kennzeichen, ein "Differentiated Services Code Point"- bzw. DSCP-Kennzeichen oder ein Dienstart- bzw. ToS(Type of Service)-Kennzeichen ist.

3. System nach Anspruch 1 oder 2, wobei das Verarbeitungsmodul ferner zum Hinzufügen eines Unternehmen-VLAN-"Tag" zu dem Dienstpaket konfiguriert ist.

4. System nach einem der vorhergehenden Ansprüche, wobei die Netzvorrichtung, die sich in dem Betreibernetz befindet, Folgendes umfasst:
ein Erhaltemodul (201), das zum Erhalten des IP-Adressensegments konfiguriert ist, das dem virtuellen lokalen Netz VLAN in dem Unternehmensnetz entspricht;
ein Zuordnungsmodul (202), das zum Zuordnen des Dienstgüte- bzw. QoS-Kennzeichens zu dem IP-Adressensegment gemäß der vorkonfigurierten QoS-Richtlinie konfiguriert ist; und
ein Sendemodul (203), das zum Senden der Entsprechung zwischen dem IP-Adressensegment und dem QoS-Kennzeichen an die Netzvorrichtung konfiguriert ist, die sich bei dem Ausgangs-Gateway des Firmennetzes befindet, wobei das Sendemodul ferner zum Senden der weiteren Entsprechung zwischen dem QoS-Kennzeichen und der QoS-Anforderung an eine Zugriffsvorrichtung konfiguriert ist, die für das Firmennetz zum Zugriff auf das Betreibernetz verwendet wird.

5. System nach Anspruch 4, das ferner die Zugriffsvorrichtung umfasst, die für das Firmennetz zum Zugriff auf das Betreibernetz verwendet wird, wobei die Zugriffsvorrichtung Folgendes umfasst:
ein Empfangsmodul (301), das zum Empfangen der weiteren Entsprechung zwischen dem Dienstgüte- bzw. QoS-Kennzeichen und der QoS-Anforderung konfiguriert ist,
wobei
das Empfangsmodul ferner zum Empfangen des durch den Host in dem VLAN des Firmennetzes gesendeten Dienstpakets konfiguriert ist, das an das Betreibernetz zu übertragen ist, wobei die Quellen-IP-Adresse des Dienstpakets zu dem IP-Adressensegment gehört, und das Dienstpaket das QoS-Kennzeichen umfasst; und
ein Verarbeitungsmodul (302), das zum Bereitstellen einer QoS für das Dienstpaket gemäß der weiteren Entsprechung zwischen dem QoS-Kennzeichen und der QoS-Anforderung konfiguriert ist.

6. System nach Anspruch 5, wobei das Dienstpaket ferner ein Firmen-VLAN-"Tag" umfasst und das Verarbeitungsmodul der Zugriffsvorrichtung speziell zum Bereitstellen der QoS für das Dienstpaket gemäß dem Firmen-VLAN-"Tag" und der weiteren Entsprechung zwischen dem QoS-Kennzeichen und der QoS-Anforderung konfiguriert ist.

7. System nach Anspruch 6, wobei die Zugriffsvorrichtung ferner ein Umwandlungsmodul umfasst, das zum Umwandeln des Firmen-VLAN-"Tag" in einen Port-VLAN-"Tag" gemäß einem physischen Port konfiguriert ist; und das Verarbeitungsmodul der Zugriffsvorrichtung speziell zum Differenzieren zwischen unterschiedlichen Dienstpaketen unterschiedlicher Unternehmen gemäß dem Port-VLAN-"Tag" und dem QoS-Kennzeichen und zum Bereitstellen einer QoS für das Dienstpaket konfiguriert ist.

8. Verfahren zum Bereitstellen einer Dienstgüte, QoS, für ein Dienstpaket wobei das Verfahren auf ein System zum Bereitstellen einer Dienstgüte QoS für ein Dienstpaket angewandt wird und das System eine erste Netzvorrichtung, eine zweite Netzvorrichtung und eine dritte Netzvorrichtung umfasst, wobei sich die erste Netzvorrichtung bei einem Ausgangs-Gateway eines Firmennetzes befindet, sich die zweite Netzvorrichtung in einem Betreibernetz befindet und die dritte Netzvorrichtung eine Zugriffsvorrichtung ist, die für das Firmennetz zum Zugriff auf das Betreibernetz verwendet wird, wobei ein DHCP-Server in die erste Netzvorrichtung eingebaut ist und ein "Internet-Protocol"- bzw. IP-Adressensegment zu einem virtuellen lokalen Netz, VLAN, in dem Firmennetz zuordnet, wobei verschiedene VLANs verschiedenen Diensten entsprechen und verschiedene Dienste, VLANs und IP-Adressensegmente einander entsprechen, wobei das Verfahren Folgendes umfasst:
Senden, durch die erste Netzvorrichtung, des IP-Adressensegments an die zweite Netzvorrichtung; Erhalten (501), durch die zweite Netzvorrichtung, des IP-Adressensegments, das dem VLAN in dem Firmennetz entspricht;
Zuordnen (502), durch die zweite Netzvorrichtung, eines QoS-Kennzeichens zu dem IP-Adressensegment gemäß einer vorkonfigurierten QoS-Richtlinie, wobei die QoS-Richtlinie eine Entsprechung zwischen dem IP-Adressensegment und dem QoS-Kennzeichen und eine weitere Entsprechung zwischen dem QoS-Kennzeichen und
einer QoS-Anforderung umfasst;
Senden (503), durch die zweite Netzvorrichtung, der Entsprechung zwischen dem IP-Adressensegment und dem QoS-Kennzeichen an die erste Netzvorrichtung; und
Senden (504), durch die zweite Netzvorrichtung, der weiteren Entsprechung zwischen dem QoS-Kennzeichen und der QoS-Anforderung an die dritte Netzvorrichtung;
Empfangen, durch die erste Netzvorrichtung, der Entsprechung zwischen dem IP-Adressensegment und dem QoS-Kennzeichen;
Empfangen, durch die erste Netzvorrichtung, eines durch einen Host in dem VLAN des Firmennetzes gesendeten Dienstpakets, das an das Betreibernetz zu übertragen ist, wobei eine Quellen-IP-Adresse des Dienstpakets zu dem IP-Adressensegment gehört;
Hinzufügen, durch die erste Netzvorrichtung, des QoS-Kennzeichens zu dem Dienstpaket gemäß der Entsprechung zwischen dem IP-Adressensegment und dem QoS-Kennzeichen.

9. Netzvorrichtung, die sich in einem Ausgangs-Gateway eines Firmennetzes befindet und Folgendes umfasst:
einen in die Netzvorrichtung, die sich bei dem Ausgangs-Gateway befindet, eingebauten DHCP-Server, der zum Zuordnen eines "Internet-Protocol"- bzw. IP-Adressensegments zu einem virtuellen lokalen Netz, VLAN, in dem Firmennetz konfiguriert ist, wobei verschiedene VLANs verschiedenen Diensten entsprechen und verschiedene Dienste, VLANs und IP-Adressensegmente eine Entsprechung aufweisen, wobei die Netzvorrichtung, die sich bei dem Ausgangs-Gateway befindet, zum Senden des IP-Adressensegments an eine Netzvorrichtung konfiguriert ist, die sich in einem Betreibernetz befindet,
ein Empfangsmodul (101), das zum Empfangen einer Entsprechung zwischen dem IP-Adressensegment und einem Dienstgüte- bzw. QoS-Kennzeichen konfiguriert ist, wobei die Entsprechung durch die Netzvorrichtung gesendet wird, die sich in dem Betreibernetz befindet,
wobei
das Empfangsmodul ferner zum Empfangen eines durch einen Host in dem VLAN des Firmennetzes gesendeten Dienstpakets konfiguriert ist, das an das Betreibernetz zu übertragen ist, wobei eine Quellen-IP-Adresse des Dienstpakets zu dem IP-Adressensegment gehört; und
ein Verarbeitungsmodul (102), das zum Hinzufügen des QoS-Kennzeichens zu dem Dienstpaket gemäß der Entsprechung zwischen dem IP-Adressensegment und dem QoS-Kennzeichen konfiguriert ist.

10. Netzvorrichtung nach Anspruch 9, wobei das QoS-Kennzeichen ein 802.1P-Kennzeichen, ein "Differentiated Services Code Point"- bzw. DSCP-Kennzeichen oder ein Dienstart- bzw. ToS(Type of Service)-Kennzeichen ist.

11. Netzvorrichtung nach Anspruch 9 oder 10, wobei das Verarbeitungsmodul ferner zum Hinzufügen eines Unternehmen-VLAN-"Tag" zu dem Dienstpaket konfiguriert ist.

## Revendications

1. Système comprenant un dispositif de réseau situé dans un réseau d'opérateur et un dispositif de réseau situé au niveau d'une passerelle de sortie d'un réseau d'entreprise, le dispositif de réseau situé au niveau de la passerelle de sortie du réseau d'entreprise comprenant :
un serveur DHCP intégré dans le dispositif de réseau situé au niveau de la passerelle de sortie, configuré pour affecter un segment d'adresse sur protocole Internet (IP) à un réseau local virtuel (VLAN) dans le réseau d'entreprise, où différents VLAN correspondent à différents services et où correspondent différents services, VLAN et
segments d'adresse IP, le dispositif de réseau situé au niveau de la passerelle de sortie étant configuré pour envoyer le segment d'adresse IP au dispositif de réseau situé dans le réseau d'opérateur ;
un module de réception (101), configuré pour recevoir une correspondance entre le segment d'adresse IP et une marque de qualité de service (QoS), la correspondance étant envoyée par le dispositif de réseau situé dans le réseau d'opérateur, la marque QoS étant une marque QoS affectée par le dispositif de réseau situé dans le réseau d'opérateur au segment d'adresse IP selon une stratégie QoS préconfigurée et la stratégie QoS comprenant la correspondance entre le segment d'adresse IP et la marque QoS et une autre correspondance entre la marque QoS et une exigence QoS, le module de réception étant en outre configuré pour recevoir un paquet de service qui est envoyé par un hôte dans le VLAN du réseau d'entreprise et qui doit être transmis au réseau d'opérateur, une adresse IP source du paquet de service appartenant au segment d'adresse IP ; et
un module de traitement (102), configuré pour ajouter la marque QoS au paquet de service selon la correspondance entre le segment d'adresse IP et la marque QoS.

2. Système selon la revendication 1, dans lequel la marque QoS comprend une marque parmi une marque 802.1P, une marque de valeur de code d'accès aux services différenciés (DSCP) et une marque de type de service (ToS).

3. Système selon la revendication 1 ou 2, dans lequel le module de traitement est en outre configuré pour ajouter une balise VLAN d'entreprise au paquet de service.

4. Système selon l'une des revendications précédentes, dans lequel le dispositif de réseau situé dans le réseau d'opérateur comprend :
un module d'obtention (201), configuré pour obtenir le segment d'adresse IP correspondant au réseau local virtuel (VLAN) dans le réseau d'entreprise ;
un module d'affectation (202), configuré pour affecter la marque de qualité de service (QoS) au segment d'adresse IP selon la stratégie QoS préconfigurée ; et
un module d'envoi (203), configuré pour envoyer la correspondance entre le segment d'adresse IP et la marque QoS au dispositif de réseau situé au niveau de la passerelle de sortie du réseau d'entreprise, le module d'envoi étant en outre configuré pour envoyer l'autre correspondance entre la marque QoS et l'exigence QoS à un dispositif d'accès utilisé par le réseau d'entreprise pour accéder au réseau d'opérateur.

5. Système selon la revendication 4, comprenant en outre le dispositif d'accès utilisé par le réseau d'entreprise pour accéder au réseau d'opérateur, le dispositif d'accès comprenant :
un module de réception (301), configuré pour recevoir l'autre correspondance entre la marque de qualité de service (QoS) et l'exigence QoS, le module de réception étant en outre configuré pour recevoir le paquet de service qui est envoyé par l'hôte dans le VLAN du réseau d'entreprise et qui doit être transmis au réseau d'opérateur, l'adresse IP source du paquet de service appartenant au segment d'adresse IP et le paquet de service comprenant la marque QoS ; et
un module de traitement (302), configuré pour fournir une QoS pour le paquet de service selon l'autre correspondance entre la marque QoS et l'exigence QoS.

6. Système selon la revendication 5, dans lequel le paquet de service comprend en outre une balise VLAN d'entreprise et le module de traitement du dispositif d'accès est spécifiquement configuré pour fournir la QoS pour le paquet de service selon la balise VLAN d'entreprise et l'autre correspondance entre la marque QoS et l'exigence QoS.

7. Système selon la revendication 6, dans lequel le dispositif d'accès comprend en outre un module de conversion, configuré pour convertir la balise VLAN d'entreprise en une balise VLAN de port selon un port physique ; et le module de traitement du dispositif d'accès est spécifiquement configuré pour faire la distinction entre différents paquets de service de différentes entreprises selon la balise VLAN de port et la marque QoS et pour fournir une QoS pour le paquet de service.

8. Procédé de fourniture d'une qualité de service (QoS) pour un paquet de service, le procédé étant appliqué à un système de fourniture d'une qualité de service (QoS) pour un paquet de service et le système comprenant un premier dispositif de réseau, un deuxième dispositif de réseau et un troisième dispositif de réseau, le premier dispositif de réseau étant situé au niveau d'une passerelle de sortie d'un réseau d'entreprise, le deuxième dispositif de réseau étant situé dans un réseau d'opérateur et le troisième dispositif de réseau étant un dispositif d'accès utilisé par le réseau d'entreprise pour accéder au réseau d'opérateur, un serveur DHCP étant intégré dans le premier dispositif de réseau et affectant un segment d'adresse sur protocole Internet (IP) à un réseau local virtuel (VLAN) dans le réseau d'entreprise, où différents VLAN correspondent à différents services et où correspondent différents services, VLAN et segments d'adresse IP, le procédé comprenant les étapes consistant à :
envoyer, par le premier dispositif de réseau, le segment d'adresse IP au deuxième dispositif de réseau ;
obtenir (501), par le deuxième dispositif de réseau, le segment d'adresse IP correspondant au VLAN dans le réseau d'entreprise ;
affecter (502), par le deuxième dispositif de réseau, une marque QoS au segment d'adresse IP selon une stratégie QoS préconfigurée, la stratégie QoS comprenant une correspondance entre le segment d'adresse IP et la marque QoS et une autre correspondance entre la marque QoS et une exigence QoS ;
envoyer (503), par le deuxième dispositif de réseau, la correspondance entre le segment d'adresse IP et la marque QoS au premier dispositif de réseau ; et
envoyer (504), par le deuxième dispositif de réseau, l'autre correspondance entre la marque QoS et l'exigence QoS au troisième dispositif de réseau ;
recevoir, par le premier dispositif de réseau, la correspondance entre le segment d'adresse IP et la marque QoS ;
recevoir, par le premier dispositif de réseau, un paquet de service qui est envoyé par un hôte dans le VLAN du réseau d'entreprise et qui doit être transmis au réseau d'opérateur, une adresse IP source du paquet de service appartenant au segment d'adresse IP ;
ajouter, par le premier dispositif de réseau, la marque QoS au paquet de service selon la correspondance entre le segment d'adresse IP et la marque QoS.

9. Dispositif de réseau, situé au niveau d'une passerelle de sortie d'un réseau d'entreprise, comprenant :
un serveur DHCP intégré dans le dispositif de réseau situé au niveau de la passerelle de sortie, configuré pour affecter un segment d'adresse sur protocole Internet (IP) à un réseau local virtuel (VLAN) dans le réseau d'entreprise, où différents VLAN correspondent à différents services et où différents services, VLAN et segments d'adresse IP ont une correspondance, le dispositif de réseau situé au niveau de la passerelle de sortie étant configuré pour envoyer le segment d'adresse IP à un dispositif de réseau situé dans un réseau d'opérateur ;
un module de réception (101), configuré pour recevoir une correspondance entre le segment d'adresse IP et une marque de qualité de service (QoS), la correspondance étant envoyée par le dispositif de réseau situé dans le réseau d'opérateur, le module de réception étant en outre configuré pour recevoir un paquet de service qui est envoyé par un hôte dans le VLAN du réseau d'entreprise et qui doit être transmis au réseau d'opérateur, une adresse IP source du paquet de service appartenant au segment d'adresse IP ; et
un module de traitement (102), configuré pour ajouter la marque QoS au paquet de service selon la correspondance entre le segment d'adresse IP et la marque QoS.

10. Dispositif de réseau selon la revendication 9, dans lequel la marque QoS comprend une marque parmi une marque 802.1P, une marque de valeur de code d'accès aux services différenciés (DSCP) et une marque de type de service (ToS).

11. Dispositif de réseau selon la revendication 9 ou 10, dans lequel le module de traitement est en outre configuré pour ajouter une balise VLAN d'entreprise au paquet de service.
